# EUROPEAN PATENT APPLICATION

(11) **EP 1 441 292 A1**
(43) Date of publication of application: **28.07.2004**
(21) Application number: 03001172.0
(22) Date of filing: 21.01.2003
(51) Int. Cl.: G06F 17/30

(54) **Method for processing metadata**

(71) Applicant: DEUTSCHE THOMSON-BRANDT GMBH, 78048 Villingen-Schwenningen (DE)
(72) Inventor: Li, Hui, Dr., 30419 Hannover (DE); Kochale, Axel, 31832 Springe (DE); Kubsch, Stefan, 31559 Hohnhorst (DE); Peters, Hartmut, 30890 Barsinghausen (DE); Hepper, Dietmar, 30419 Hannover (DE)

(57) **Abstract**

Metadata databases shall be cleaned regularly. Those metadata which are not utilized as index information of essence anymore should be deleted. Thus, there is provided a method and a device to save the selected metadata as essence. This means that metadata (1) seleceted by a graphical user interface (5) are converted into a new essence (4) by taking over the MD-essence (2) of the metadata (1) into the new essence (4). The user may find further essence data (6, 8, 12) on the basis of the MD-link (3) of the selected meta data (1) which could be added to new essence (4).

## Description

The present invention relates to a method for processing multimedia data by providing metadata including metadata essence data representing information, which is directly perceptible by a user, and/or metadata link data directly or indirectly pointing to further essence data and providing a memory for storing essence data. Furthermore, the present invention relates to a correspondig device for processing multimedia data.

### Background

Multimedia data includes essence data like text, pictures, videos and audio samples which are directly perceptible by a user. Moreover, multimedia data includes metadata which provides further information as to those essence data to which the metadata is linked. Additionally the metadata may provide linking information describing the linkage to other essence data.

The metadata may be collected in a metadata database. Such metadata database should be cleaned regularly. Usually those metadata, which are not utilized as index information for essence any more, should be deleted. However, sometimes, though some metadata are not utilized as index information of essence, they are still used by other metadata. For instance, other metadata may still direct to this metadata. In this scenario this metadata acts only as essence.

### Invention

In view of that it is the object of the present invention to provide a method and a device for making easier the process of cleaning a metadata database.

According to the present invention this object is solved by a method for processing multimedia data including the steps of providing first metadata including first metadata essence data representing information, which is directly perceptible by a user, and/or metadata link data directly or indirectly pointing to further essence data and providing a memory for storing essence data, as well as converting said first metadata essence data and/or said further essence data being directly or indirectly pointed at by said metadata link data into new essence data and storing and providing said new essence data in said memory.

Furthermore, according to the present invention there is provided a device for processing multimedia data including first storing means for providing first metadata including first metadata essence data representing information, which is directly perceptible by a user, and/or metadata link data directly or indirectly pointing to further essence data and second storing means for storing essence data as well as converting means for converting said first metadata essence data and/or said further essence data being directly or indirectly pointed at by said metadata link data into new essence data, wherein said converting means is interconnected between said first storing means and said second storing means so that converted essence data are storable in said second storing means.

By applying the above method or device it is possible to keep a metadata database clean by saving the selected metadata as essence. The content of the new generated essence does not have to be based only on metadata essence of selected metadata, but also on other content-coherent essence or metadata which is directed by a metadata link of the selected metadata.

The convertion of metadata essence data and/or further essence data being directly or indirectly pointed at by said metadata link data into new essence data may be performed with the help of a graphical user interface, which makes editing of the new essence data comfortable.

The further essence data the metadata link data are pointing at may be included in second metadata as second metadata essence data. Thus, essence data of several metadata may be joint for new essence data.

The convertion of metadata into essence data is preferably performed by transferring essence data of the metadata into a new essence data file. Such a transfer without format transformation enables rapid processing.

The metadata essence data may include text, picture, audio and/or video information. These different information data may be combined in the new essence data or, alternatively, the new essence data may be formed by a single type of these essence data.

Furthermore, third essence data may be added to the new essence data. This means, that not only two essence data can be combined to the new essence data but any number of different essence data included or not included in metadata may be combined to the new essence data.

### Drawings

The present invention will be explained in more detail in connection with the attached drawings, showing in:
- Fig. 1: a basic method for convertion of metadata into essence according to the present invention; and
- Fig. 2: an advanced method for convertion of metadata into essence according to the present invention.

In the following, embodiments of the present invention are presented. Metadata consists of two parts:

Metadata-essence (MD-essence) and metadata-link (MD-link). MD-essence is a part of a metadata, which is designed to be human understandable or perceptible and which serves as the proxy by which the metadata will be presented to the user in any user interface of systems employing metadata. In contrast to this, MD-link is a part of metadata, which links to essence or other metadata, so that MD-link forms a logical part of the metadata.

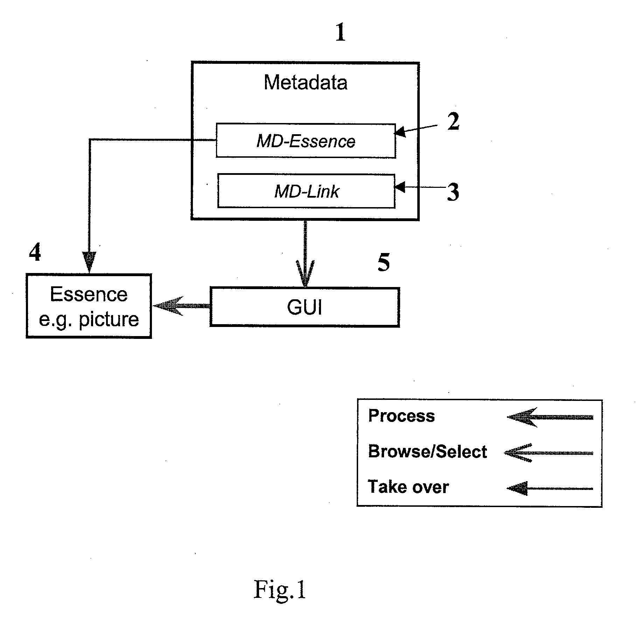

Generally, the task of convertion of metadata into essence is to convert MD-essence of metadata into essence. As shown in a first embodiment of the present invention according to figure 1 the basic method for convertion metadata 1 into essence 4 includes the transfer of MD-essence 2 into this essence 4. The procedure is operated under a graphic user interface (GUI) 5.

Several MD-essences 2 of a plurality of metadata 1 may be transferred to the same essence 4 by employing the above described method. Thus, a lot of metadata may be deleted in order to clean the metadata database without loosing essence data of interest.

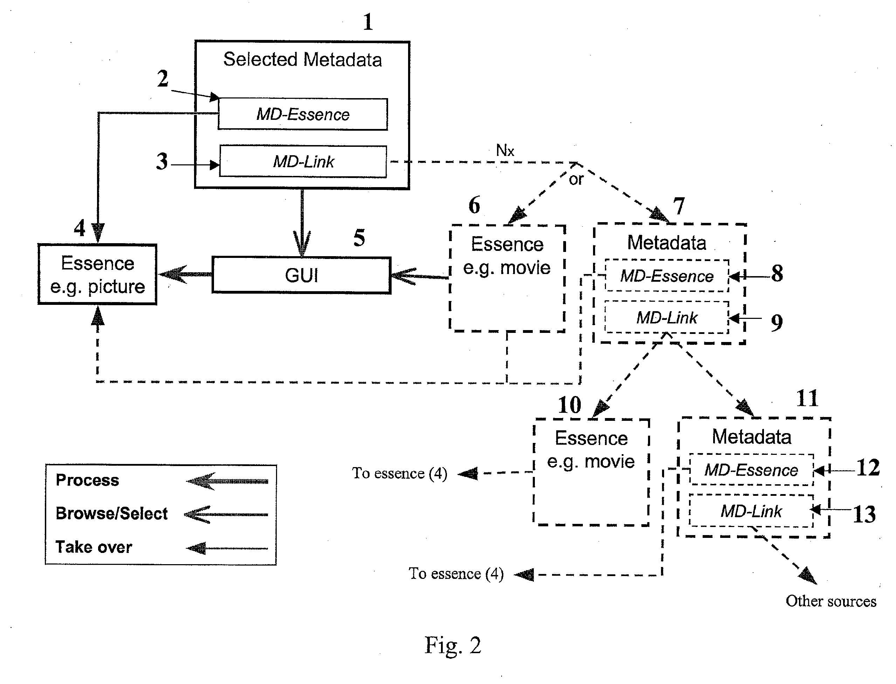

As indicated in figure 1 by the different types of arrows the GUI 5 browses or selects the metadata 1 within the metadata database. Further, the GUI 5 together with a processor (not shown) processes the information obtained from the metadata 1 and provides a file for storing the new essence 4. After that the MD-essence 2 is taken over into the file of the new essence 4. In some cases it may be necessary to complete the new essence formed by the MD-essence 2. For instance, if the MD-essence 2 is a compact annotation or summary, it might be extended in order to generate a complete significant essence. Therefore, there is provided an advanced method as shown in figure 2 in order to convert metadata into such complete significant essence. Similar to the basic method of figure 1 the metadata selected by the GUI 5 are converted into the new essence 4. Thus, at first, the MD-essence 2 is transferred into essence 4. The MD-essence 2 may be a text, a picture, an audio presentation or a video clip or the like. Since the MD-essence 2 in this case only provides a limited compact message it should be completed to a meaning full essence 4. Therefore, it is desired to find out other content-associated sources to supplement the new created essence 4.

In order to find further essence being closely content-coherent with the selected metadata 1 the MD-link 3 is used as a first hint. The MD-link 3 may point to an essence 6 like a movie or other metadata 7. The user may select essence 6 by employing the GUI 5 so that the complete essence 6 or a part of it is added to essence 4. Additionally or alternatively the user can select a metadata 7 as a source for supplement material to essence 4. By a simple editing process the user can add MD-essence 8 from metadata 7 as additional content to essence 4. If the user decides that the essence 4 is not yet complete he can use MD-link 9 of metadata 7 to find more content correlated information. For this the user can select further essence 10 and/or further metadata 11 on the basis of MD-link 9 by employing the GUI 5. Again, the corresponding essences 10 or 12 may be edited or transferred to essence 4, respectively.

Such further metadata 11 also includes a MD-link 13 pointing to other sources of information. Thus, the user can repeat the above step of selecting further data on the basis of a MD-link. In this way a user will look for further information to obtain a complete essence 4. The whole process is operated under the GUI 5.

As a plurality of essences and MD-essences of several metadata can be summarized by such a process in a new essence file, the corresponding original metadata may be deleted from a metadata database. Similarly, essences may be removed from essence data bases if summarized in the new essence file. This means that the above process is a powerful tool to clean metadata databases or essence data bases.

In the following a concrete example for applying the inventive process shall be given. A metadata which includes a picture of Eiffel Tower as its MD-essence 3 is frequently used by other metadata as representative image of Paris. On the basis of MD-links 3 of this metadata 1 other metadata showing other representative scences of Paris may be found. Now the user wants to convert the plural metadata into a new essence. At first, the user may simply convert the picture of Eiffel Tower into a picture essence. Next, the user may utilize the above described advanced method to look for other Paris associated materials with the help of the MD-links of metadata 1. For example, through link connection the user may find other pictures of famous scenes of Paris such as photos of Arc de triomphe, Notre Dame, Musée du Louvre and so on. The user may make use of all these representative pictures of Paris to create a new essence 4 which consists of a group of representative pictures of Paris. Based on these pictures of the new essence 4 the user may make a slight show of Paris.

As indicated above the inventive method for creating new esessence data also can be used for "fighting metadata garbage". This means, that the selected metadata which is no longer utilized as metadata can be converted into essence. Any metadata links that have originally directed to the selected meta data are still valid and they may now direct to the new created essence.

## Claims

1. Method for processing multimedia data including the steps of
providing first metadata (1) including first metadata essence data (2) representing information, which is directly perceptible by a user, and/or metadata link data (3) directly or indirectly pointing to further essence data (6, 8, 12) and
providing a memory for storing essence data,
**characterized by**
converting said first metadata essence data (2) and/or said further essence data (6, 8, 12) being directly or indirectly pointed at by said metadata link data (3) into new essence data (4) and
storing and providing said new essence data (4) in said memory.

2. Method according to claim 1, wherein the step of converting includes a step of editing under the control of a graphical user interface (5).

3. Method according to claim 1 or 2, wherein said further essence data (6, 8, 12) being included in second metadata (7) as second metadata essence data (8).

4. Method according to one of the claims 1 to 3, wherein said step of converting data includes the step of the transferring said data to said memory.

5. Method according to one of the claims 1 to 4, wherein said first and/or second metadata essence data (2,8) include text, picture, audio and/or video information.

6. Method according to one of the claims 1 to 5, further including the step of adding third essence data (10, 12) to said new essence data (4).

7. Device for processing multimedia data including first storing means for providing first metadata (1) including first metadata essence data (2) representing information, which is directly perceptible by a user, and/or metadata link data (3) directly or indirectly pointing to further essence data (6, 8, 12) and
second storing means for storing essence data
**characterized by**
converting means for converting said first metadata essence data (2) and/or said further essence data (6, 8, 12) being directly or indirectly pointed at by said metadata link data (3) into new essence data (4), wherein said converting means is interconnected between said first storing means and said second storing means so that converted essence data are storable in said second storing means.

8. Device according to claim 7, wherein said converting means includes a graphical user interface (5) for editing said new essence data (4).

9. Device according to claim 7 or 8, wherein said further essence data (6, 8, 12) being included in second meta data (7) as second metadata essence data (8).

10. Device according to one of the claims 7 to 9, wherein said converting means include transferring means for transferring essence data to said second storing means.

11. Device according to one of the claims 7 to 10, wherein said first and/or second metadata essence data (2, 8) include text, picture, audio and/or video information.
